# EUROPÄISCHE PATENTSCHRIFT

(11) **EP 1 078 965 B1**
(45) Veröffentlichungstag und Bekanntmachung des Hinweises auf die Patenterteilung: **23.04.2003**
(21) Anmeldenummer: 00114467.4
(22) Anmeldetag: 06.07.2000
(51) Int. Cl.: C09J 5/06, C09J 7/00

(54) **Thermoaktivierbare Haftklebefolie und Verfahren zur Herstellung struktureller Klebverbindungen**
Thermally activatable adhesive foil and process of structural bonding
Feuille adhésive thermo-activable et procédé pour la préparation d'assemblages structurels

(30) Priorität: 25.08.1999 DE 19940340
(43) Veröffentlichungstag der Anmeldung: 28.02.2001
(73) Patentinhaber: Lohmann GmbH & Co. KG, 56567 Neuwied (DE)
(72) Erfinder: Pahl, Andreas, Dr., 56567 Neuwied (DE); Domanski, Reinhold, 56566 Neuwied (DE)
(74) Vertreter: Flaccus, Rolf-Dieter, Dr.

(56) Entgegenhaltungen:
- DE-C- 4 427 802
- FR-A- 2 249 148
- US-A- 5 593 759

## Beschreibung

Die Erfindung betrifft eine thermoaktivierbare Haftklebefolie und ein Verfahren zur Herstellung struktureller Klebungen.

Strukturelle Klebungen werden gemäß dem Stand der Technik üblicherweise durch Strukturklebstoffe wie Epoxidharze oder Cyanoacrylate realisiert. Nach der ASTM-Definition sind strukturelle Klebungen gekennzeichnet durch die Verwendung von Fügeteilen mit hoher innerer Festigkeit wie z.B. Metallen, Holz, Keramik und verstärkten Kunststoffen. Der Klebstoff soll dabei in der Lage sein, innerhalb der vorgeschriebenen Grenzen Spannungsverteilungen zwischen den Fügeteilen auszugleichen, ohne daß Spannungsrißbildung auftritt. Außerdem soll eine strukturelle Klebung in der Lage sein, über einen längeren Zeitraum typischen Umwelteinflüssen zu widerstehen. Da hierfür geeignete Klebstoffe beispielsweise auch bei Montagearbeiten in der Automobil- und Bauindustrie Verwendung finden, werden sie vielfach als Konstruktionsklebstoffe bezeichnet (siehe G. Habenicht, "Kleben", Springer Verlag, 3. Auflage 1997, Seite 130). Den Stand der Technik auf dem Gebiet der Strukturklebstoffe gibt z.B. S. R. Hartshorn (ed.), "Structural Adhesives", Plenum Press, 1. Auflage 1986, wieder.

Nach dem Stand der Technik werden Strukturklebstoffe entweder in flüssiger Form oder als bei Raumtemperatur nicht klebrige Schmelzklebefolien auf die zu verbindenden Substrate aufgetragen. Hitzeaktivierbare Trägerfolien werden als Heißklebe- oder Hotmeltfolien bezeichnet. Sie bestehen aus einem Gemisch von Phenolharz und Nitrilkautschuk mit Dicken zwischen 30 und 300 µm. Besonders bevorzugt sind hitzeaktivierbare Trägerfolien mit Dicken zwischen 50 und 150 µm. Solche Folien lassen sich beispielsweise durch Beschichten aus Lösungen herstellen, indem man unter Verwendung einer geeigneten Auftragsvorrichtung auf einem silikonisierten Papier eine Schicht von vorgegebener Dicke aufträgt und das Lösungsmittel verdampft. Nitrilkautschukphenolharzmischungen können in Mischern, Knetern oder Extrudern aus kommerziell verfügbaren Rohstoffen hergestellt werden. Es sind aber auch beschichtungsfertige Mischungen in Lösung, üblicherweise in Butanon, kommerziell erhältlich.

Unter Phenolharzen werden Reaktionsprodukte aus Phenol und Formaldehyd verstanden. Über die Wahl des Phenolderivats und des molaren Verhältnisses von Phenol und Formaldehyd sind Eigenschaften dieser Phenolharze über einen weiten Bereich steuerbar. Unter Nitrilkautschuk, sogenannter NBR-Kautschuk, wird ein Copolymer aus Acrylnitril und Butadien verstanden. Auch hier ist das Eigenschaftsprofil über weite Bereiche steuerbar, insbesondere dann, wenn weitere Monomere wie beispielsweise Acrylsäure, sogenannte CTBN-Kautschuke, eingesetzt werden. Die verwendeten Gemische aus Phenolharz und Nitrilkautschuk erweichen zunächst bei Arbeitstemperaturen ab ca. 50°C, wobei sie klebrig werden, um schließlich bei höheren Temperaturen, etwa um 150 °C, zu einem duromeren Material mit kovalenten Vernetzungspunkten auszuhärten. Die Aushärtungsreaktion beruht auf einer Reaktion freier OH-Gruppen des Phenolharzes mit funktionellen Gruppen des Nitrilkautschuks. Den Stand der Technik dieser Chemie beschreibt S.R. Hartshorn (ed.), "Stuctural Adhesives", Plenum Press, 1. Auflage 1986, 2. Kapitel.

Das kanadische Patent 564192 sowie die DE 38 34 879 beschreiben Gemische aus Phenolharzen und Acrylnitrilbutadienkautschuken, die entweder aus Lösung auf Fügeflächen aufgetragen oder als Schmelzklebefolien verwendet werden. Als technisches Anwendungsgebiet werden Verfahren zum Kleben von Karosserie- bzw. Rumpfteilen im Kraftfahrzeug- bzw. Flugzeugbau erwähnt.

DE 44 27 802 beschreibt die Verwendung einer thermoaktivierbaren Klebefolie zur Herstellung von Datenträgern.

Nach DE 41 24 053 werden Klebefolien oder Klebstofflösungen zur Herstellung einer Haftverbindung zwischen wenigstens einem Bauteil und einem metallischen Substrat verwendet.

US 4,751,105 beschreibt die Verwendung derartiger Klebstoffe in Lösung oder als Folie zur Herstellung von gedruckten Schaltungen.

Schließlich beschreibt US 5,273,798 die Verwendung der genannten hitzeaktivierbaren Folien bei der Herstellung hochtemperaturbeständiger Etiketten.

Die bekannten Verfahren haben den Nachteil, daß während des Aushärtungsprozesses die zu verklebenden Teile in Lage gehalten und beispielsweise durch mechanische Verklammerungen, Nieten oder Nageln fixiert werden müssen. Bei automatisierten Prozessen geht damit zeitintensives Fixieren der Fügeteile seriell in die Taktzeit ein. Im Fall der Anwendung von Lösemittelklebstoffen muß zusätzlich das Problem der Lösemittelverdampfung und -emission gelöst werden.

Die noch nicht veröffentlichte DE 199 05 800.8 beschreibt einen Haft- und Strukturklebstoff, enthaltend ein Copolymer, das gleichzeitig als Klebharz und als Komponente zur thermischen Härtung verwendet wird. Obwohl die Kompatibilität des Klebharzes mit den zu verbindenden Fügeteilen eine gute Verklebung ermöglicht, werden mit derartigen Systemen keine Scherfestigkeiten erreicht, die im Bereich des strukturellen Klebens liegen.
Der vorliegenden Erfindung liegt die Aufgabe zugrunde, ein Verfahren sowie einen Klebstoff gemäß Oberbegriff von Anspruch 1 anzugeben, welche das Erfordernis einer zuverlässigen Fixierung zu verbindender Fügeteile in vorgegebener Position während der Aushärtung des Strukturklebstoffs ohne mechanische Fixierungsmittel und Bedarf an zeitintensiven Maßnahmen ermöglicht sowie unkompliziert und annähernd kostenneutral durchführbar ist.

Zur Lösung dieser Aufgabe wird bei einem Verfahren der eingangs genannten Art mit der Erfindung vorgeschlagen, daß zum Fügen der zu verbindenden Fügeteile mittels einer Klebverbindung eine Folie aus heißsiegelfähigem Konstruktionsklebstoff mit beidseitiger Haftklebstoffbeschichtung in die Klebfuge eingelegt wird, und daß die Fügeteile durch Andrücken an die Haftklebefolie untereinander in einer vorgegebenen Position fixiert werden, und der Konstruktionsklebstoff durch Wärmeeinwirkung zur Aushärtung gebracht wird.

Ein wesentlicher Vorteil der zum Strukturkleben beanspruchten hitzeaktivierbaren Klebefolien besteht in ihrer haftklebenden Ausrüstung auf Basis Phenolharz/Nitrilkautschuk. Die im Zusammenwirken mit diesen Haftklebefolien verwendeten Haftklebstoffe sind temperaturstabil und/oder verfügen über ein Nachvernetzungspotential. Deshalb finden insbesondere Haftklebstoffe Verwendung, wie sie in der EP 0 881 271 beschrieben sind. Als Haftklebstoff wird eine Klebstoffart bezeichnet, die in trockenem, lösemittelfreiem Zustand bei Zimmertemperatur dauerhaft klebrig ist und bei direktem Kontakt auf einer Vielzahl verschiedener Oberflächen haftet, wobei durch Andrücken an die Oberfläche der zu verklebenden Fügeteile eine Benetzung herbeigeführt wird, die ausreichende Haftungskräfte ergibt. Der Stand der Technik auf dem Gebiet des Haftklebens wird z.B. von I. Benedek, L. J. Heymann, "Pressure-sensitive Adhesive Technology", Marcel Dekker, 1. Auflage 1997, beschrieben. Der weitere Vorteil der beanspruchten hitzeaktivierbaren Haftklebefolie besteht darin, daß strukturelle Klebungen unter Verwendung erhöhter Temperatur und Druck in einem lösemittelfreien Verfahren hergestellt werden, wobei die Fügeteile aufgrund der haftklebenden Fixierung unmittelbar positioniert werden, was z.B. eine Automatisierung des Klebevorgangs erheblich erleichtert und kostengünstiger werden läßt.

Weitere vorteilhafte Ausgestaltungen des erfindungsgemäßen Verfahrens sind nach den Unteransprüchen vorgesehen. Entsprechend wird die heißsiegelfähige Folie aus einem Phenolharzgemisch hergestellt, worin als zweite Komponente Nitrilkautschuk, Epoxidharz oder ein Polyvinylacetat enthalten ist.
Die Dicke der haftklebenden Folie kann mit 30 bis 300 µm eingestellt werden. Weiterhin ist der wärmebeständige Haftklebstoff ausgewählt aus der Gruppe der Copolyacrylate, Kautschuke oder Polysiloxane. Mit Vorteil wird der wärmebeständige Haftklebstoff auf die ihn tragende heißsiegelfähige Folie beidseits flächig oder in Form von Mustern aufgetragen mit einem Auftragsgewicht von 1 bis 100 g/m², wobei zweckmäßig ein Haftklebstoff verwendet wird, der über ein Nachvernetzungspotential verfügt.
Schließlich ist ein mit wärmebeständigem Haftklebstoff beidseitig beschichteter heißsiegelfähiger Konstruktionsklebstoff dadurch gekennzeichnet, daß er nach dem in den Patentansprüchen gekennzeichneten Verfahren hergestellt ist.

Durch fachmännische Wahl der Haftkleber und eine flächige oder musterförmige Auftragung können Klebungen von Fügeteilen besonderen Anforderung optimal angepaßt werden. Überraschenderweise zeigt sich, daß durch eine flächige oder musterförmige Beschichtung der wärmebeständigen Haftkleber mit einem Auftragsgewicht von 1 bis 100 g/m², vorzugsweise 5 - 20 g/m², die hitzeaktivierbaren Eigenschaften wie z.B. das Nachvernetzungspotential der Folien nicht beeinträchtigt werden.

Die beanspruchte thermoaktivierbare Haftklebefolie ist durch den bei Raumtemperatur vorhandenen haftklebenden Charakter in der Lage, Fügeteile mit hoher Klebkraft durch leichtes Andrücken zu fixieren, um dann anschließend im geklebten Zustand durch Zufuhr thermischer Energie ein irreversibles Molekülnetzwerk aufzubauen, das sich durch hohe chemische und Temperaturbeständigkeit auszeichnet. Trotz der Möglichkeit der thermischen Nachhärtung sind diese hitzeaktivierbaren Klebebänder bei Raumtemperatur mindestens 6 Monate lagerfähig, ohne daß sich ihre Qualität verändert.

### Vergleichsbeispiel V:

Pliobond 30, ein Phenolharz-Nitrilkautschukgemisch in Butanon, Feststoffgehalt 30 %, Handelsprodukt der Fa. Ashland Chemical, wird mit einer handelsüblichen Beschichtungvorrichtung mit Auftragswerk und Trocknungskanal auf einem silikonisierten Papier mit einer Geschwindigkeit von 10 m/min beschichtet. Die Vorrichtung ist so eingestellt, daß eine trockene, nicht klebende Folie von 100 µm Schichtdicke erhalten wird.

### Beispiel 1:

Pliobond 30, ein Phenolharz-Nitrilkautschukgemisch in Butanon, Festoffgehalt 30 %, Handelsprodukt der Fa. Ashland Chemical, wird auf einer handelsüblichen Beschichtungsvorrichtung mit Auftragswerk und Trocknungskanal auf einem silikonisierten Papier mit einer Geschwindigkeit von 10m/min beschichtet.
Das Auftragswerk ist so eingestellt, daß eine hitzeaktivierbare, bei Raumtemperatur trockene und nicht klebrige Folie von 100 µm Schichtdicke resultiert.
Auf der gleichen Beschichtungsanlage wird anschließend eine Transferklebefolie von 20 µm Schichtdicke hergestellt, indem eine Haftklebstofflösung von Feststoffgehalt 45 % mit 25 m/min auf silikonisiertes Papier beschichtet wird. Der Haftklebstoff hat Nachvernetzungspotential.
Anschließend wird die 20 µm Transferklebefolie auf beide Seiten der hitzeaktivierbaren Folie mit Hilfe eines Plattenkaschierwerks aufgebracht.

### Beispiel 2:

Die hitzeaktivierbare Folie aus Beispiel 1 wird beidseitig mit PSA 610, Polysiloxanhaftklebstoff der Fa. GE Bayer Silicones, im Transferverfahren beidseitig mit je 20 µm Schichtdicke und einer abgestuft fluorsilikonisierten PET-Folie abgedeckt.

### Beispiel 3:

Die hitzeaktivierbare Folie aus Beispiel 1 wird beidseitig mit Gelva 2465, einem Handelsprodukt der Fa. Monsanto, im Tansferverfahren beschichtet. Die Viskosität des Acrylathaftklebstoffs ist mit Hilfe eines geeigneten Thixotropiermittels so eingestellt, daß ein punktförmiger Auftrag mittels Gravurwalze auf silikonisiertes Papier ermöglicht wird (ca. 22500 Punkte/m²). Anschließend werden die Klebstoffpunkte im Transferverfahren auf die hitzeaktivierbare Folie übertragen.

### Beispiel 4:

100 Gewichtsteile Perbunan NT 3480, ein Nitrilkautschuk, Handelsprodukt der Fa. Bayer AG, 6 Gewichtsteile Zinkoxid, 3 Gewichtsteile Schwefel und 1,5 Gewichtsteile Benzothiazyldisulfid werden unter Rühren und Kneten in 332 Gewichtsteilen Methylethylketon gelöst. Anschließend wird eine Lösung von 50 Gewichtsteilen Erisysy (Resolharz, Handelsprodukt der Fa. CVC) in 78 Gewichtsteile Methylethylketon zugegeben und bis zur Homogenität gerührt. Aus diesem so erhaltenen Gemisch wird wie in Beispiel 1 eine 150 µm dicke nachvernetzbare Hotmeltfolie hergestellt. Diese Folie wird mit dem Klebstoff aus Beispiel 3 punktförmig, wie dort beschrieben, beschichtet.

### Ergebnisse:

Die Klebkraft wurde nach DIN EN 1939 ermittelt. Die Zugscherfestigkeit einer überlappenden Metall-/Metallklebung wurde nach ISO 4587 bestimmt. Der Gelgehalt wurde durch 24stündige Extraktion des Klebstoffs in Toluol ermittelt.

| Beispiel | Klebkraft [N/25 mm] | Zugscherfestigkeit [N/312 mm²] | Gelgehalt [%] |
|---|---|---|---|
| V | <1 | a) 240 | a)19 |
| | | b)1805 | b)84 |
| 1 | 21 | a) 380 | a)24 |
| | | b)2110 | b)89 |
| 2 | 15 | a) 370 | a)18 |
| | | b)1910 | b)75 |
| 3 | 20 | a) 350 | a)20 |
| | | b)2180 | b)81 |
| 4 | 22 | a) 290 | a)23 |
| | | b)2100 | b)77 |

### Erläuterungen:

a) geprüft im Originalzustand
b) geprüft nach Aushärtung 20 min/6bar/160 °C

Die Beispiele zeigen, daß man gemäß der Erfindung thermoaktivierbare Haftklebebänder erhält, die sich im Unterschied zum vergleichsbeispiel durch gute Klebkraft bei Raumtemperatur auszeichnen, so daß ein ausreichendes Fixieren der Fügeteile durch leichtes Andrücken möglich ist. Im anschließenden Härtungsvorgang, etwa in einem Lackofen, kann somit auf ein Klammern oder Nieten der Fügepartner verzichtet werden. Die Taktzeiten im Produktionsprozeß werden somit verkürzt. Die Beispiele zeigen auch, daß die flächige oder musterförmige Beschichtung der Folien mit Haftklebstoff die hitzeaktivierbaren Eigenschaften, wie z.B. ein Nachvernetzungspotential, der Folien nicht beeinträchtigt.

## Patentansprüche

1. Verfahren zur Herstellung struktureller Klebverbindungen von Fügeteilen, insbesondere mittels Konstruktionsklebstoffen, wobei die zu verbindenden Fügeteile während der Aushärtung des Klebstoffes in vorgegebener Position gehalten werden, **dadurch gekennzeichnet, daß** zum Fügen eine Folie aus heißsiegelfähigem Konstruktionsklebstoff mit beidseitiger Haftklebstoffbeschichtung in die Klebefuge eingelegt wird, wobei die mit Haftklebstoff beschichtete Folie aus heißsiegelfähigem Klebstoff aus einem Phenolharzgemisch besteht, in welchem die zweite Komponente entweder ein Nitrilkautschuk, ein Epoxidharz oder ein Polyvinylacetat ist, und daß die Fügeteile durch Andrücken an die Haftklebefolie untereinander in einer vorgegebenen Position fixiert werden und der Konstruktionsklebestoff durch Wärmeeinwirkung zur Aushärtung gebracht wird.

2. Verfahren nach Anspruch 1, **dadurch gekennzeichnet, daß** die zweite Komponente bevorzugt Nitrilkautschuk ist.

3. Verfahren nach Anspruch 1 oder 2, **dadurch gekennzeichnet, daß** die Dicke der haftklebend ausgerüsteten Folie auf 30 bis 300 µm, vorzugswelse 50 bis 100 µm, eingestellt wird.

4. Verfahren nach einem der vorhergehenden Ansprüche, **dadurch gekennzeichnet, daß** der wärmebeständige Haftklebstoff ausgewählt ist aus der Gruppe der Copolyacrylate, Kautschuke oder Polysiloxane.

5. Verfahren nach einem oder mehreren der Ansprüche 1 bis 4, **dadurch gekennzeichnet, daß** der wärmebeständige Haftklebstoff auf die ihn tragende heißsiegelfähige Klebstoffolie beidseitig flächig oder in Form von Mustern aufgetragen wird.

6. Verfahren nach einem oder mehreren der Ansprüche 1 bis 5, **dadurch gekennzeichnet, daß** der wärmebeständige Haftklebstoff auf die ihn tragende Folie mit einem Auftraggewicht von 1 bis 100 g/m², vorzugsweise 5 bis 20 g/m², aufgetragen wird.

7. Verfahren nach einem oder mehreren der Ansprüche 1 bis 6, **dadurch gekennzeichnet, daß** ein Haftklebstoff zum Auftragen auf die Klebstoffolie verwendet wird, der über ein Nachvernetzungspotential verfügt.

8. Thermoaktivierbare Haftklebefolie zur Herstellung struktureller Klebverbindungen von Fügeteilen, aufgebaut aus einer Folie aus Konstruktionsklebstoff mit beidseitiger Haftklebstoffbeschichtung, **dadurch gekennzeichnet, daß** die Konstruktionsklebstoff-Folie heißsiegelfähig, nicht Klebend und aus einem Phenolharzgemisch hergestellt ist, in welchem die zweite Komponente entweder ein Nitrilkautschuk, ein Epoxidharz oder ein Polyvinylacetat ist, und daß der Konstruktionsklebstoff unter Wärmeeinwirkung härtbar ist, und daß der Haftklebstoff wärmebeständig und/oder nachvernetzbar ist .

## Claims

1. Process for making structural adhesive joints of parts to be joined, especially by means of structural adhesives, said parts being held in predetermined position during the curing of the adhesive, **characterized in that**
for joining the said parts, a film of heat-sealable structural adhesive with double-side pressure-sensitive adhesive coating is inserted into the adhesive joint, the pressure sensitive adhesive-coated film of heat-sealable adhesive being manufactured from a phenol resin mixture in which the second component is either a nitrile rubber, an epoxide resin or a polyvinyl acetate, and that the joined parts are fixed to one another in a predetermined position by pressing them on the pressure-sensitive adhesive film, and that the structural adhesive is subjected to final curing by exposure to heat.

2. Process according to Claim 1, **characterized in that** the second component is preferably nitrile rubber.

3. Process according to Claim 1 or 2, **characterized in that** the thickness of the pressure-sensitive adhesive film is adjusted to be 30 to 300 µm, preferably 50 to 100 µm.

4. Process according to one of the preceding Claims, **characterized in that** the heat-resistant pressure-sensitive adhesive is selected from the group of copolyacrylates, rubbers or polysiloxanes.

5. Process according to one or more of Claims 1 to 4, **characterized in that** the heat-resistant pressure-sensitive adhesive is applied on both sides of the heat-sealable adhesive film carrying the same, coherently or in the form of patterns.

6. Process according to one or more of Claims 1 to 5, **characterized in that** the heat-resistant pressure-sensitive adhesive is applied to the film carrying the same with a coating weight of 1 to 100 g/m², preferably 5 to 20 g/m².

7. Process according to one or more of Claims 1 to 6, **characterized in that** for application on the pressure-sensitive adhesive film a pressure-sensitive adhesive is employed which possesses post-crosslinking potential.

8. Thermoactivatable pressure-sensitive adhesive film for making structural adhesive joints of parts, made up of a film of structural adhesive having a pressure-sensitive adhesive coating on both sides, **characterized in that** the structural-adhesive film is heat-sealable, non-adhesive and manufactured from a phenol resin mixture in which the second component is either a nitrile rubber, an epoxide resin or a polyvinyl acetate, and that the structural adhesive is curable by exposure to heat, and that the pressure-sensitive adhesive is heat-resistant and/or post-crosslinkable.

## Revendications

1. Procédé pour la préparation d'assemblages structurels de pièces d'assemblage, faisant en particulier appel à des colles de construction, les pièces d'assemblage à assembler étant maintenues dans une position prédéterminée pendant le durcissement de la colle, **caractérisé en ce qu'**est placée dans le joint de collage une feuille composée de colle de construction thermosoudable, ladite feuille présentant un revêtement adhésif sur ses deux faces et ladite feuille revêtue de colle adhésive étant composée de colle thermosoudable elle-même réalisée à base d'un mélange de résine phénolique dont la deuxième composante est soit un caoutchouc nitrile, soit une résine époxy, soit un polyvinylacétate, **en ce que** les pièces d'assemblage se trouvent fixées l'une par rapport à l'autre dans une position prédéterminée suite à une pression exercée sur elles pour les faire s'appuyer sur la feuille adhésive et **en ce que** la colle de construction est soumise à l'action de la chaleur pour la faire durcir.

2. Procédé selon la revendication 1, **caractérisé en ce que** la deuxième composante est de préférence un caoutchouc nitrile.

3. Procédé selon la revendication 1 ou 2, **caractérisé en ce que** l'épaisseur de la feuille pourvue d'adhésif est choisie entre 30 et 300 µm, ladite épaisseur étant de préférence comprise entre 50 et 150 µm.

4. Procédé selon l'une des revendications précédentes, **caractérisé en ce que** la colle adhésive thermorésistante est choisie dans le groupe des acrylates copolymères, des caoutchoucs ou des polysiloxanes.

5. Procédé selon l'une ou plusieurs des revendications 1 à 4, **caractérisé en ce que** la colle adhésive thermorésistante est appliquée sur les deux faces de la feuille de colle thermosoudable qui la porte, sous la forme d'une surface plane ou de dessins.

6. Procédé selon l'une ou plusieurs des revendications 1 à 5, **caractérisé en ce que** la colle adhésive thermorésistante est appliquée sur la feuille qui la porte à raison de 1 à 100 g/m², le poids du revêtement étant de préférence de 5 à 20 g/m².

7. Procédé selon l'une ou plusieurs des revendications 1 à 6, **caractérisé en ce que** la colle adhésive appliquée sur la feuille collante est une colle adhésive post-réticulable.

8. Feuille adhésive thermo-activable pour la préparation d'assemblages structurels composés de pièces d'assemblage, réalisée au départ d'une feuille composée de colle de construction dont les deux faces sont revêtues de colle adhésive, **caractérisée en ce que** la feuille de colle de construction est thermosoudable et non collante et est fabriquée à base d'un mélange de résine phénolique dont la deuxième composante est soit un caoutchouc nitrile, soit une résine époxy, soit un polyvinylacétate, **en ce que** la colle de construction peut se durcir sous l'action de la chaleur et **en ce que** la colle adhésive est thermorésistante et/ou post-réticulable.
